# EUROPEAN PATENT APPLICATION

(11) **EP 2 762 760 A1**
(43) Date of publication of application: **06.08.2014**
(21) Application number: 12836229.0
(22) Date of filing: 20.09.2012
(51) Int. Cl.: F16L 19/08

(54) **TUBE CONNECTION STRUCTURE**

(30) Priority: 30.09.2011 JP 2011218373
(71) Applicant: Daikin Industries, Ltd., Osaka-shi, Osaka 530-8323 (JP)
(72) Inventor: SHIMAMURA, Takashi, Osaka-shi, Osaka 530-8323 (JP); NAKATA, Haruo, Osaka-shi, Osaka 530-8323 (JP)
(74) Representative: HOFFMANN EITLE
(86) International application number: PCT/JP2012/073997
(87) International publication number: WO 2013/047304

(57) **Abstract**

A tube connection structure (1) has a joint body (2), and a coupling member (3) having a fastening part (133) threaded with the joint body (2) and a tool-engaging part (134) gripped by a fastening tool, the tube connection structure being configured such that the tool-engaging part (134) is separated from the fastening part (133) after the coupling member (3) is mounted to the joint body (2). The joint body (2) and the coupling member (3) have a threading contact part (140), the components of which are in contact with each other so that the threading of the coupling member (3) over the joint body (2) is limited before the tool-engaging part (134) is separated from the fastening part (133).

## Description

### TECHNICAL FIELD

The present invention relates to a tube connection structure, and particularly to a tube connection structure configured so that after a coupling member is mounted to a joint body, a tool-engaging part of the coupling member is separated from a fastening part of the coupling member.

### BACKGROUND ART

In the past, piping systems of refrigeration apparatuses have used tube joints having a joint body and a coupling member having a fastening part threaded with the joint body and a tool-engaging part gripped by a fastening tool, the tube joint being configured so that after the coupling member is mounted to the joint body, the tool-engaging part is separated from the fastening part.

Such tube joints configured so that the tool-engaging part of the coupling member is separated from the fastening part of the coupling member after the coupling member is mounted to the joint body are disclosed in Patent Literature 1 (Japanese Laid-open Patent Application No. 2008-106935) and Patent Literature 2 (Japanese Laid-open Patent Application No. 2008-157466).

In a tube joint configured so that the tool-engaging part is separated from the fastening part after the coupling member is mounted to the joint body, when the fastening torque reaches a predetermined cutting torque, a weakened portion ruptures and the tool-engaging part is cut and separated from the fastening part.

### SUMMARY OF THE INVENTION

However, the cutting torque for cutting the tool-engaging part from the fastening part is subject to a certain amount of fluctuation, due to factors such as the strength of the material used and the dimensional tolerance of the portion that is cut when the cutting torque is reached.

When a flareless tube connection structure is used as the tube joint, how well the seal performs against fluid leakage is determined by the degree of entry of a member wedged into a pipe such as a ferrule, and it is therefore necessary to appropriately correlate the rotational angle and the cutting torque when the coupling member is threaded to the joint body. However, because the change in fastening torque relative to rotational angle in a flareless tube connection structure is slow, there is a risk of large cutting torque fluctuations depending on factors such as the strength of the material used and the dimensional tolerance of the members. Therefore, there is a risk that even after the predetermined cutting torque is reached and the tool-engaging part is cut, conditions will occur such that the wedged state of the member wedged into the pipe such as a ferrule will be insufficient, and the desired seal performance will not be achieved. Conversely, conditions may arise such that the tool-engaging part will be cut after the member wedged into the pipe such as a ferrule is wedged in to the point of breaking.

An object of the present invention is to provide a tube connection structure configured such that a tool-engagement part of a coupling member is separated from a fastening part of the coupling member after the coupling member is mounted to a joint body, wherein defects such as seal failure and member breakage due to fluctuation in cutting torque are suppressed.

A tube connection structure according to a first aspect comprises a joint body, and a coupling member having a fastening part threaded with the joint body and a tool-engaging part gripped by a fastening tool, the tube connection structure being configured such that the tool-engaging part is separated from the fastening part after the coupling member is mounted to the joint body. The joint body and the coupling member have a threading contact part, the components of which are in contact with each other so that the threading of the coupling member over the joint body is limited before the tool-engaging part is separated from the fastening part.

In this tube connection structure, threading the coupling member over the joint body is limited by the threading contact part at the stage when the coupling member has been threaded over the joint body by a predetermined amount. When an attempt is made to then further thread the coupling member over the joint body, fastening torque equal to or greater than the cutting torque acts on the tool-engaging part, and the tool-engaging part is cut and separated from the fastening part.

It is thereby possible in this tube connection structure to determine the predetermined amount for threading the coupling member over the joint body, taking into account the fluctuation in cutting torque due to factors such as the strength of the material used and the dimensional tolerance of the members, and it is also possible to minimize defects such as seal failure and member breakage.

A tube connection structure according to a second aspect is the tube connection structure according to the first aspect, wherein the joint body has a joint body-side thread part threaded over the fastening part. The fastening part has a fastening part-side thread part threaded over the joint body-side thread part. The threading contact part is configured from a joint body-side contact part that either includes the rear end of the joint body-side thread part of the joint body or is formed on the rear side of the joint body-side thread part, and a fastening part-side contact part that either includes the rear end of the fastening part-side thread part of the fastening part or is formed on the rear side, in relation to the fastening direction which is the direction in which the coupling member is mounted to the joint body.

In this tube connection structure, the threading of the coupling member over the joint body is limited by contact between the fastening-direction rear ends of the thread part of the joint body and the thread part of the fastening part, and/or between the contact parts formed in the rear sides.

A tube connection structure according to a third aspect is the tube connection structure according to the second aspect, wherein the fastening part-side contact part includes a protuberance that protrudes in the radial direction.

In this tube connection structure, the size of the threading contact part can be reduced.

A tube connection structure according to a fourth aspect is the tube connection structure according to the third aspect, wherein the outside diameter of the protuberance is less than the outside diameter of the joint body and the outside diameter of the tool-engaging part.

In this tube connection structure, it is possible to impede hindrances to the work of mounting the coupling member to the joint body.

A tube connection structure according to a fifth aspect is the tube connection structure according to the third or fourth aspect, wherein the cross-sectional shape of the protuberance as seen from the fastening direction is circular.

In this tube connection structure, it is difficult to grip the protuberance with a fastening tool after the fastening part has been threaded on the joint body and the tool-engaging part has been separated.

It is thereby possible in this tube connection structure to prevent the protuberance from being gripped by a fastening tool and the fastening part from being loosened after the fastening part has been threaded on the joint body and the tool-engaging part has been separated.

A tube connection structure according to a sixth aspect is the tube connection structure according to any of the third through fifth aspects, wherein the thickness of the protuberance is 0.5 to 1.0 mm.

In this tube connection structure, it is possible to ensure that even the cutting torque does not cause any breakage by giving the protuberance a thickness of 0.5 mm or greater. It is also possible to make it difficult to grip the protuberance with a fastening tool by giving the protuberance a thickness of 1.0 mm or less.

A tube connection structure according to a seventh aspect is the tube connection structure according to the first aspect, wherein the joint body has a joint body-side thread part threaded over the fastening part. The fastening part has a fastening part-side thread part threaded over the joint body-side thread part. The threading contact part is configured from a joint body-side contact part that either includes the front end of the joint body-side thread part of the joint body or is formed on the front side, and a fastening part-side contact part that either includes the front end of the fastening part-side thread part of the fastening part or is formed on the front side of the joint body-side thread part, in relation to the fastening direction which is the direction in which the coupling member is mounted to the joint body.

In this tube connection structure, the threading of the coupling member over the joint body is limited by contact between the fastening-direction front ends of the thread part of the joint body and the thread part of the fastening part, and/or between the contact parts formed in the front sides.

### BRIEF DESCRIPTION OF THE DRAWINGS

FIG. 1 is a cross-sectional view showing the state of the flareless tube connection structure according to an embodiment of the present invention when the structure begins to be connected to a pipe;
FIG. 2 is a cross-sectional view showing the front ferrule and the back ferrule as being provisionally assembled together;
FIG. 3 is a cross-sectional view showing an enlargement of section A in FIG. 2;
FIG. 4 is a cross-sectional view showing the provisional assembly state of the back ferrule and the coupling member;
FIG. 5 is a cross-sectional view showing an enlargement of section B in FIG. 4;
FIG. 6 is a cross-sectional view showing the joint body;
FIG 7 is a cross-sectional view showing an enlargement of section C in FIG. 6;
FIG. 8 is a cross-sectional view showing the coupling member;
FIG. 9 is a rear surface view showing the coupling member;
FIG. 10 is a cross-sectional view showing the front ferrule;
FIG. 11 is a cross-sectional view showing the back ferrule;
FIG. 12 is a cross-sectional view showing the vicinity of the threading contact part;
FIG. 13 is a cross-sectional view showing the state of the flareless tube connection structure when connection to the pipe is complete (the state immediately before cutting);
FIG. 14 is a cross-sectional view showing the state of the flareless tube connection structure when connection to the pipe is complete (the state after cutting);
FIG. 15 is a cross-sectional view along I-I in FIG. 14;
FIG. 16 is a graph showing the relationship between the rotational angle of the coupling member and fastening torque in a structure that is not provided with a threading contact part (when the cutting torque is set in accordance with a soft material);
FIG. 17 is a graph showing the relationship between the rotational angle of the coupling member and fastening torque in a structure that is not provided with a threading contact part (when the cutting torque is set in accordance with a hard material);
FIG. 18 is a graph showing the relationship between the rotational angle of the coupling member and fastening torque in a structure that is provided with a threading contact part (when the cutting torque is set in accordance with a hard material);
FIG. 19 is a perspective view showing the main part of a specialized tool of the flareless tube connection structure;
FIG. 20 is a drawing showing the threading contact part of the flareless tube connection structure of Modification 1, corresponding to FIG. 15;
FIG. 21 is a cross-sectional view showing the state of the flareless tube connection structure of Modification 2 when connection to the pipe is complete (the state immediately before cutting);
FIG. 22 is a cross-sectional view showing the state of the flareless tube connection structure of Modification 3 when connection to the pipe is complete (the state immediately before cutting);
FIG. 23 is a cross-sectional view showing the state of the flareless tube connection structure of Modification 4 when connection to the pipe is complete (the state immediately before cutting);
FIG. 24 is a cross-sectional view showing the state of the flareless tube connection structure in Modification 5 when the structure begins to be connected to a pipe;
FIG. 25 is a cross-sectional view showing the state of the flareless tube connection structure in Modification 6 when the structure begins to be connected to a pipe;
FIG. 26 is a cross-sectional view showing the state of the flareless tube connection structure in Modification 7 when the structure begins to be connected to a pipe;
FIG. 27 is a cross-sectional view showing the state of the flareless tube connection structure in Modification 8 when the structure begins to be connected to a pipe; and
FIG. 28 is a drawing showing the threading contact part of the flareless tube connection structure of Modification 9, corresponding to FIG. 12.

### DESCRIPTION OF EMBODIMENTS

Embodiments of the tube connection structure according to the present invention are described below based on the drawings.

### <Configuration>

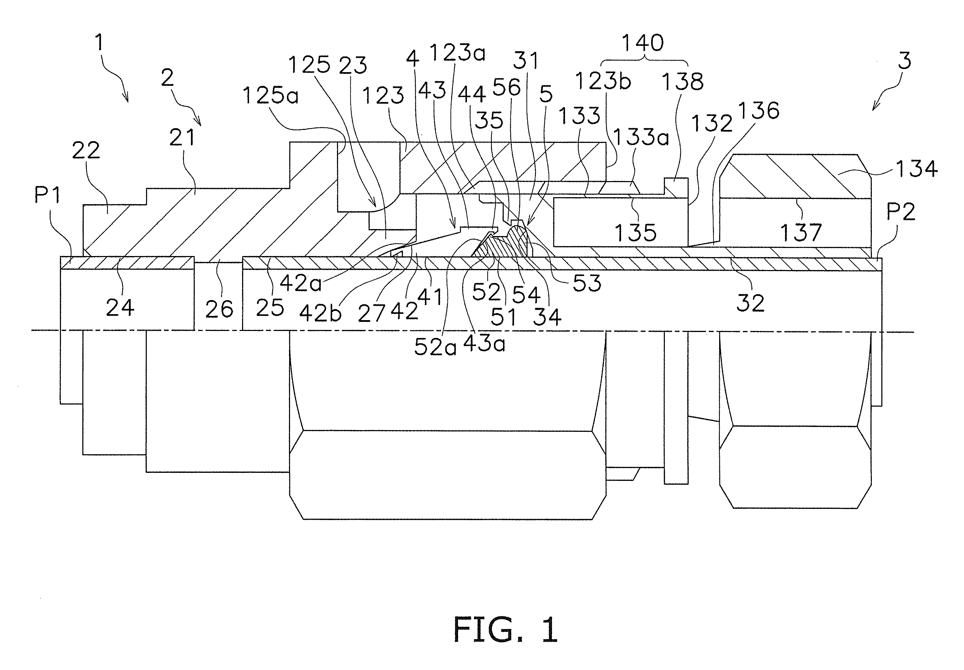

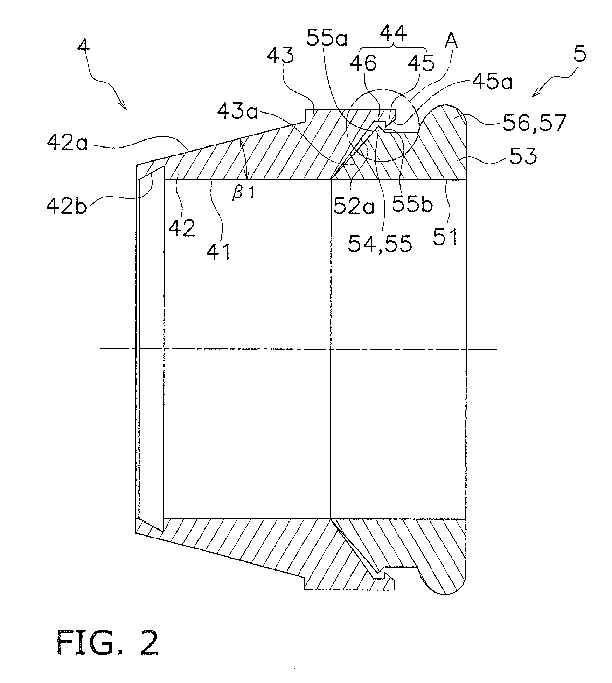

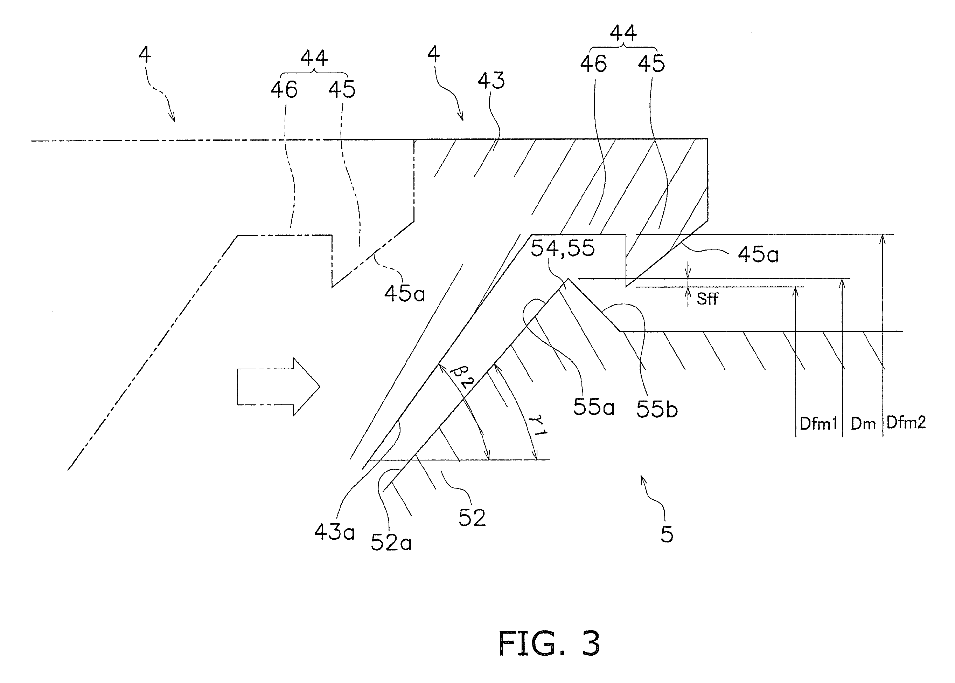

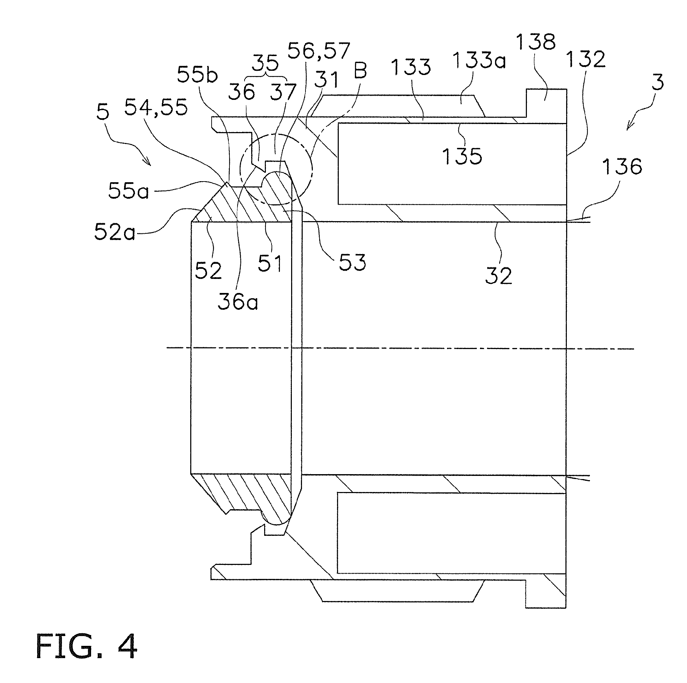

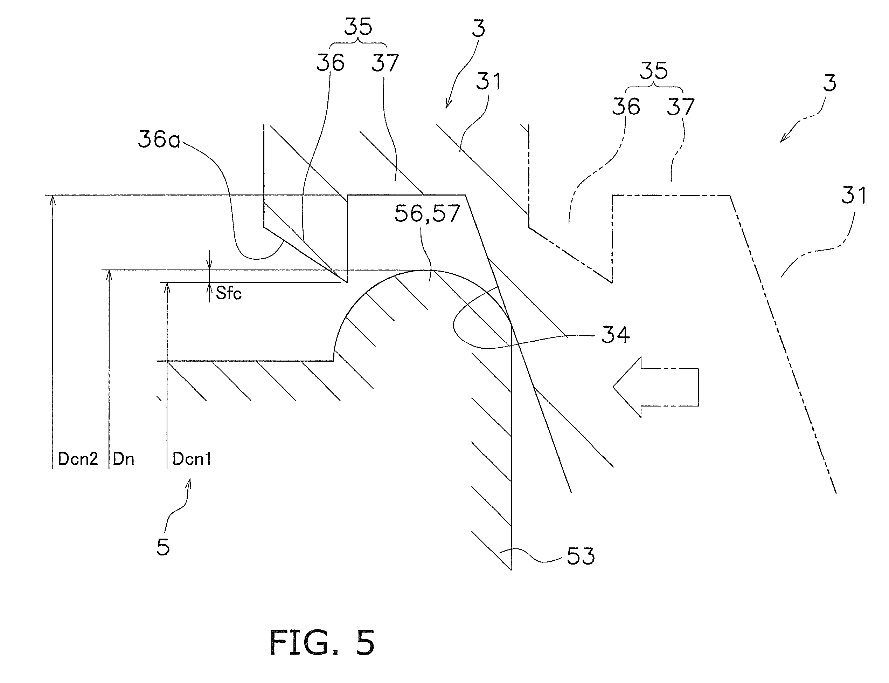

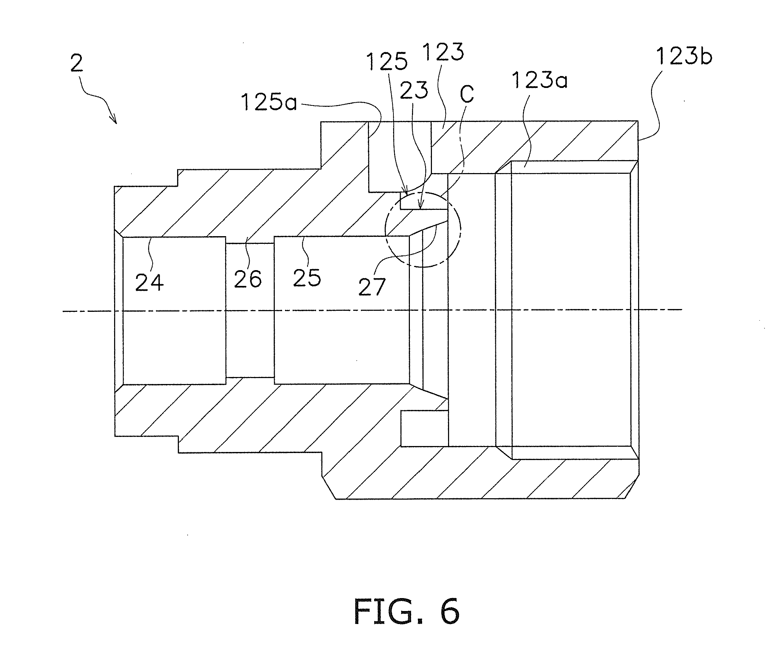

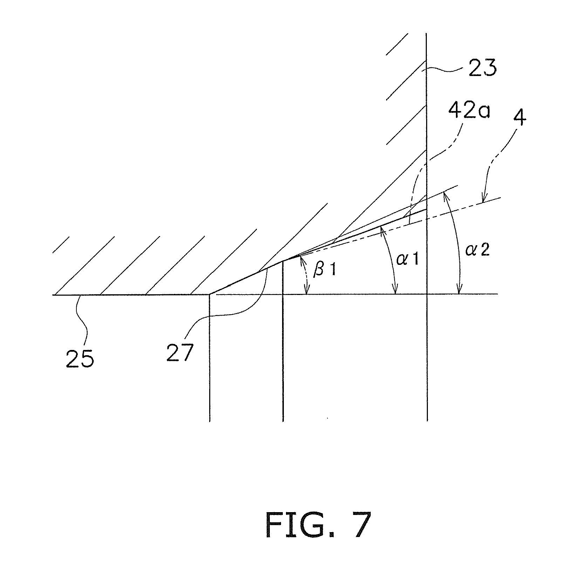

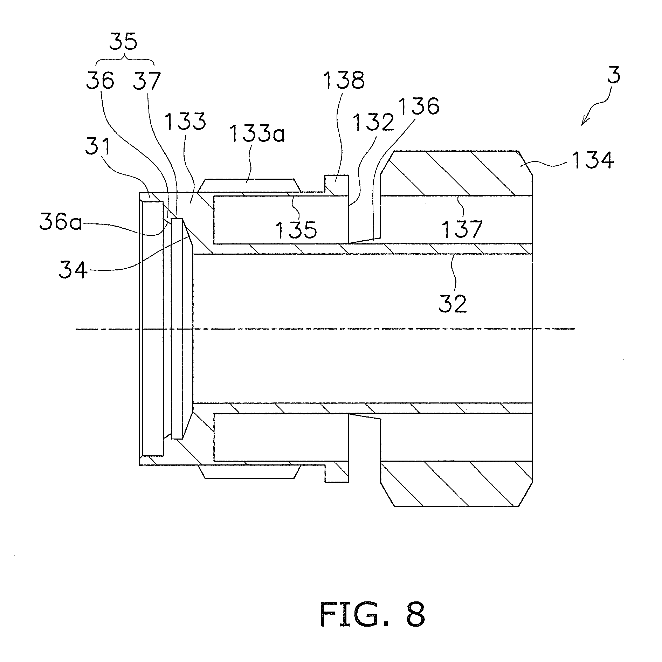

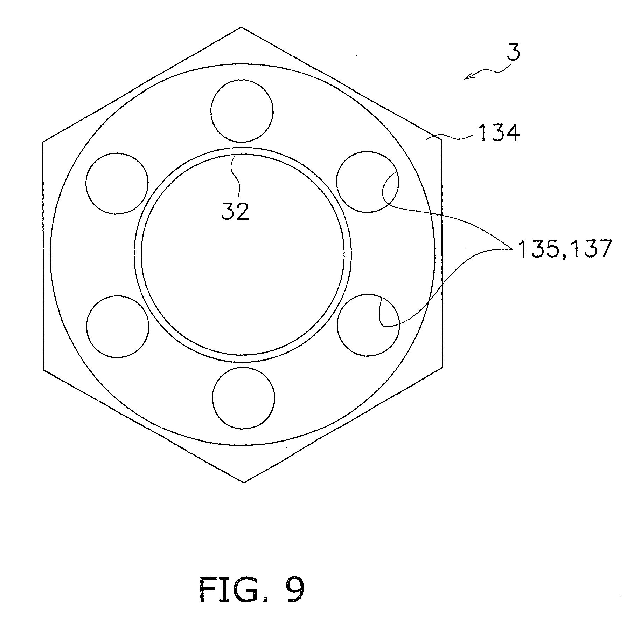

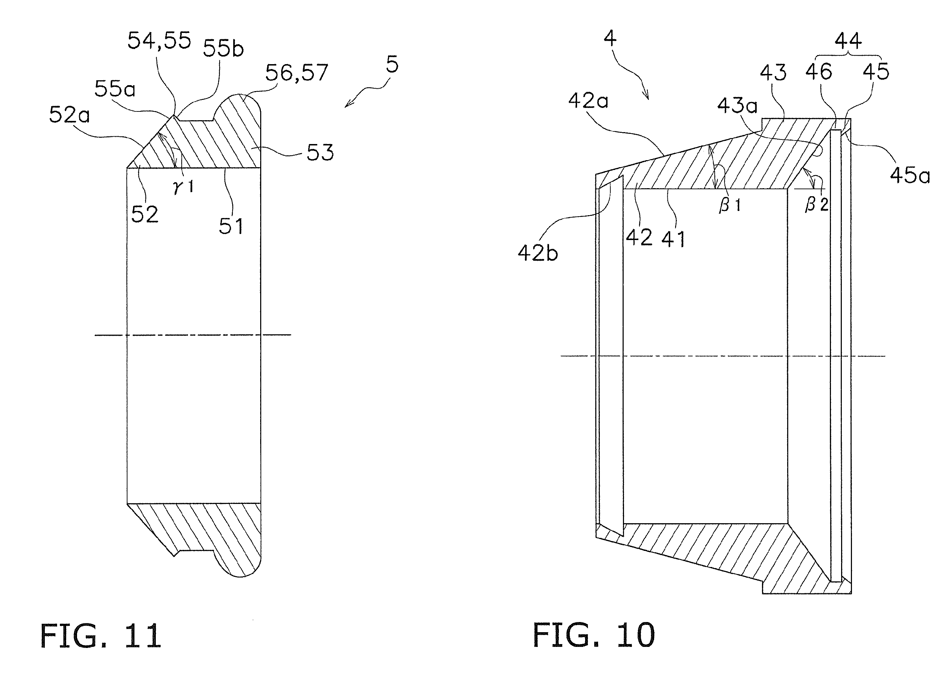

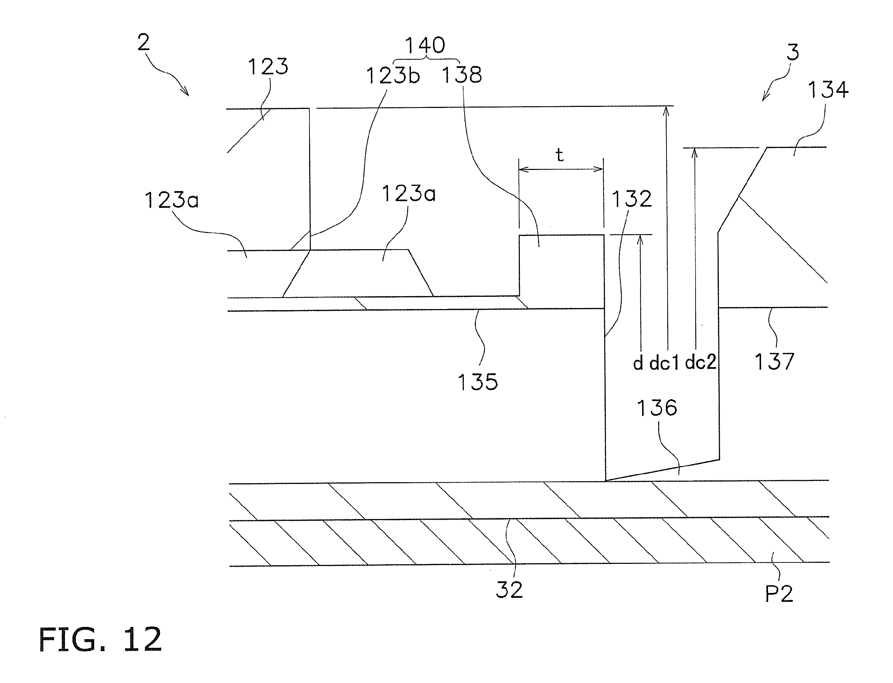

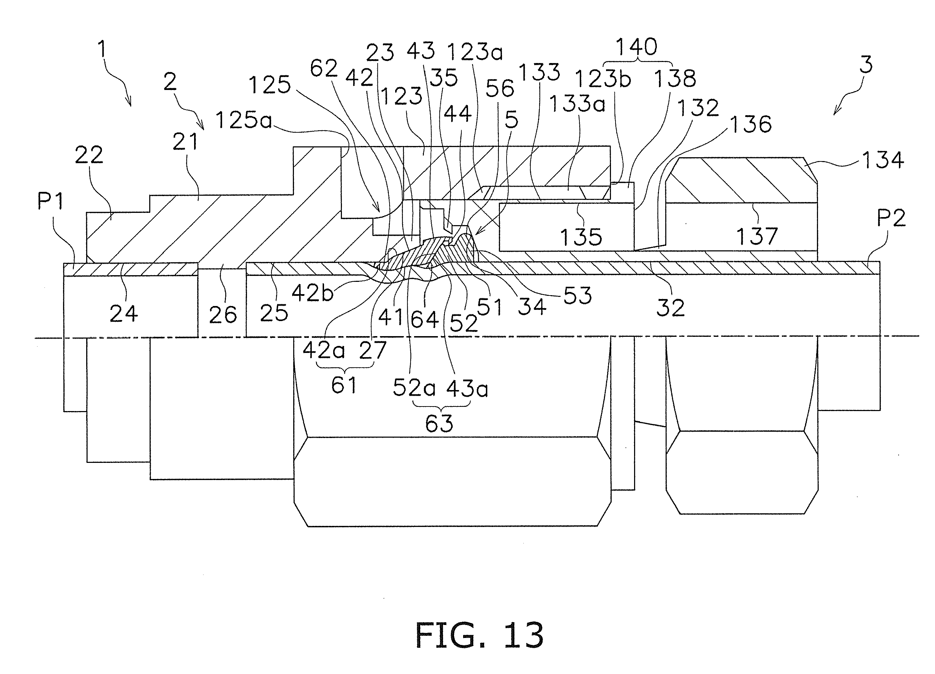

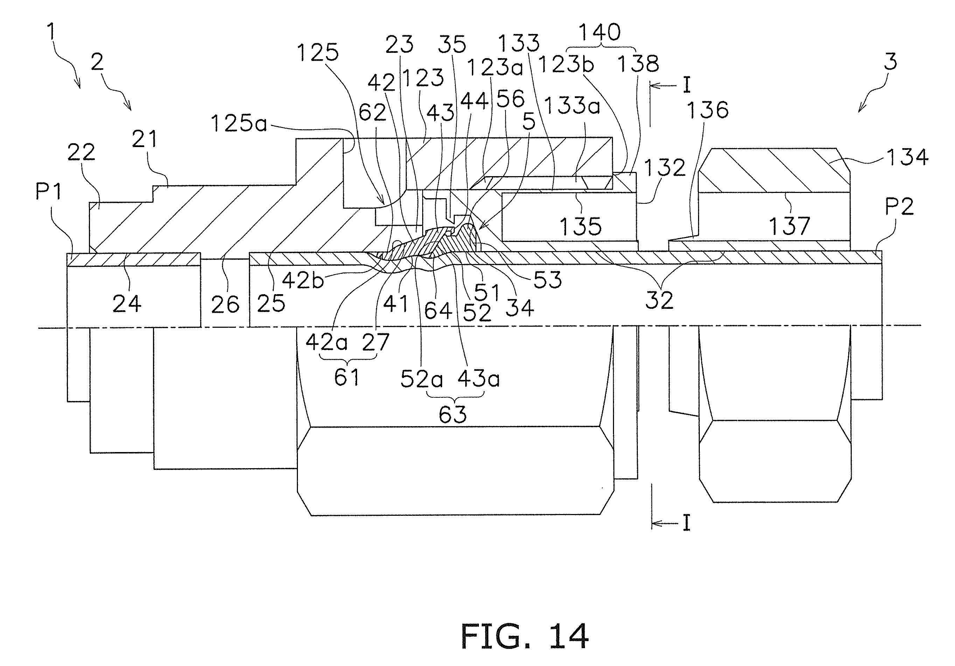

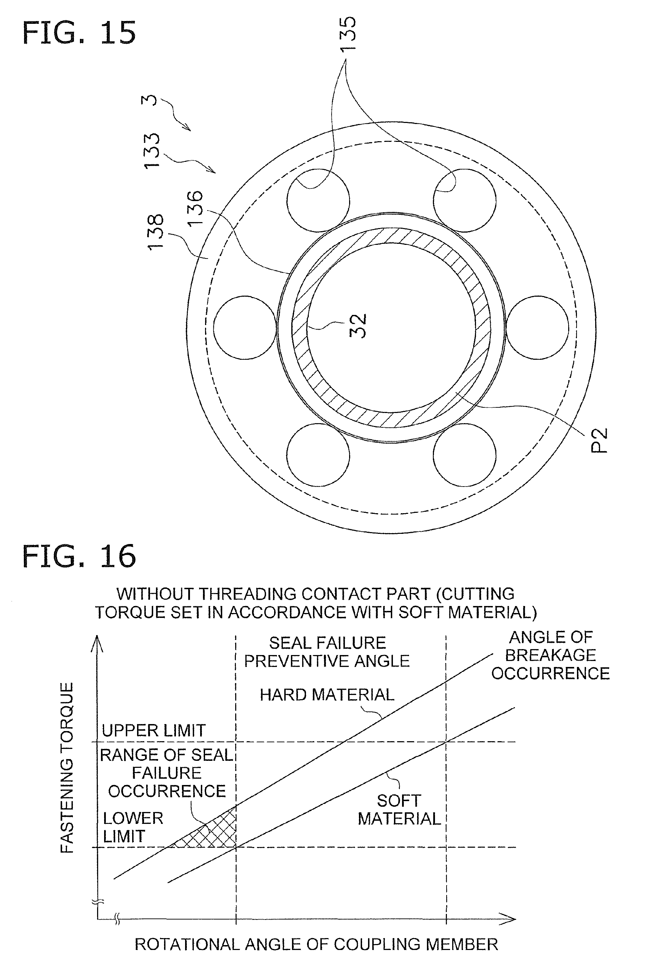

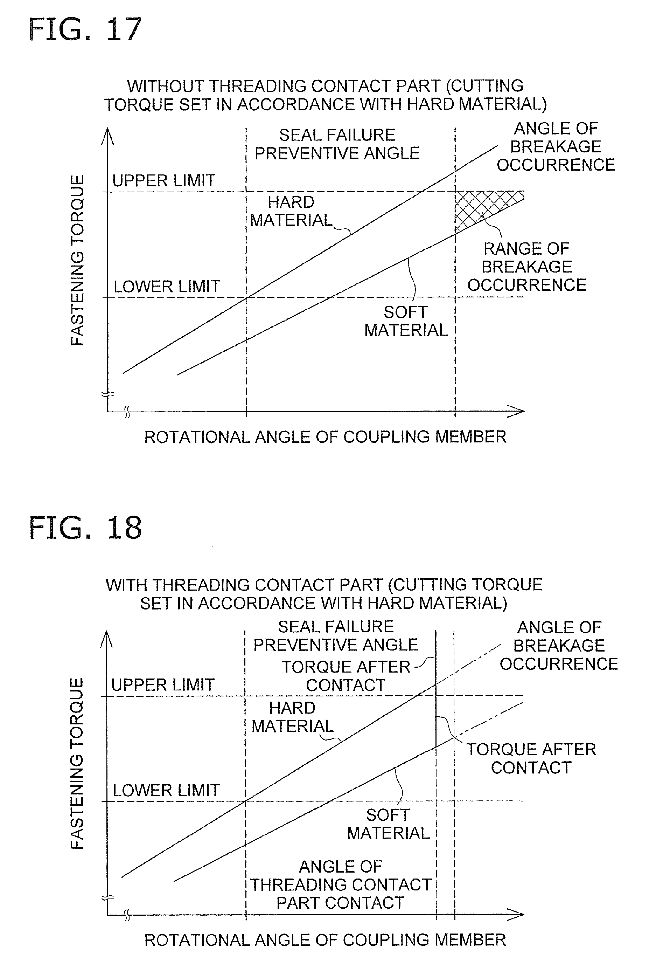

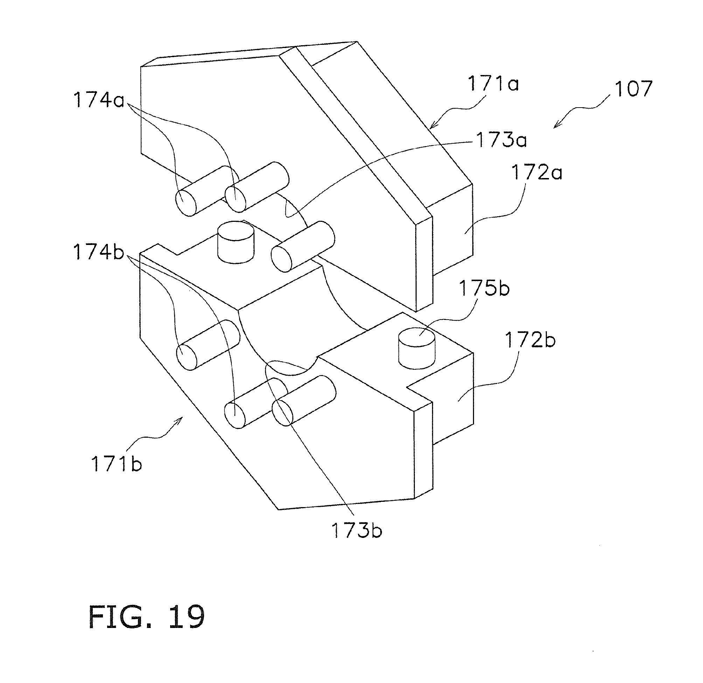

The flareless tube connection structure 1 of the present embodiment is applied to a tube joint part in a tube joint for connecting pipes together, or to a tube joint part in a device such as a valve to which a pipe is connected in a piping system of a refrigeration apparatus such as a heat pump air conditioning apparatus or a water heating apparatus. FIG. 1 is a cross-sectional view showing the state of the flareless tube connection structure 1 according to an embodiment of the present invention when the structure begins to be connected to a pipe. FIG. 2 is a cross-sectional view showing a front ferrule 4 and a back ferrule 5 as being provisionally assembled together. FIG. 3 is a cross-sectional view showing an enlargement of section A in FIG. 2. FIG. 4 is a cross-sectional view showing the provisional assembly state of the back ferrule 5 and the coupling member 3. FIG. 5 is a cross-sectional view showing an enlargement of section B in FIG. 4. FIG. 6 is a cross-sectional view showing the joint body 2. FIG 7 is a cross-sectional view showing an enlargement of section C in FIG. 6. FIG. 8 is a cross-sectional view showing the coupling member 3. FIG. 9 is a rear surface view showing the coupling member 3. FIG. 10 is a cross-sectional view showing the front ferrule 4. FIG. 11 is a cross-sectional view showing the back ferrule 5. FIG. 12 is a cross-sectional view showing the vicinity of the threading contact part 140. FIG. 13 is a cross-sectional view showing the state of the flareless tube connection structure 1 when connection to the pipe is complete (the state immediately before cutting). FIG. 14 is a cross-sectional view showing the state of the flareless tube connection structure 1 when connection to the pipe is complete (the state after cutting). FIG. 15 is a cross-sectional view along I-I in FIG. 14. FIG. 16 is a graph showing the relationship between the rotational angle of the coupling member 3 and fastening torque in a structure that is not provided with a threading contact part 140 (when the cutting torque is set in accordance with a soft material). FIG. 17 is a graph showing the relationship between the rotational angle of the coupling member and fastening torque in a structure that is not provided with a threading contact part 140 (when the cutting torque is set in accordance with a hard material). FIG. 18 is a graph showing the relationship between the rotational angle of the coupling member and fastening torque in a structure that is provided with a threading contact part 140 (when the cutting torque is set in accordance with a hard material). FIG. 19 is a perspective view showing the main part of a specialized tool 107 of the flareless tube connection structure 1. The terms "front" and "rear" used in the following description refer to orientations referencing the fastening direction, which is the direction whereby the coupling member is mounted to the joint body, and in FIG. 1, the side facing the left in the image is the "front" while the side facing the right in the image is the "rear." The term "axial direction" refers to the direction running along the axial centers of the members, and the term "radial direction" refers to the direction that intersects the axial direction. Drawings such as FIGS. 13 and 14 are images showing the ferrules 4, 5 as being wedged into a pipe P2, and in practice the ferrules 4, 5 could also be wedged into the pipe P2 in a slightly different manner than in drawings such as FIGS. 13 and 14.

The flareless tube connection structure 1 has primarily a joint body 2, a coupling member 3, a front ferrule 4, and a back ferrule 5. The joint body 2 is a member attached to a pipe P1 led out form a connected-side device. The coupling member 3 is a member fitted over a pipe P2 connected to the joint body 2 and mounted to the joint body 2 by being threaded thereto. The front ferrule 4 and the back ferrule 5 are members that are formed separately from the joint body 2 and the coupling member 3 and are clamped between the joint body 2 and the coupling member 3. The pipes P1, P2 are members made of a metal such as copper.

The joint body 2 is a member made of a metal such as brass, and the joint body has a base part 21. A socket part 22 is formed in the front side of the base part 21, and a cylinder part 123 and a shaft part 23 are formed in the rear side of the base part 21. A thread part 123a (joint body-side thread part) composed of a female screw for threading the coupling member 3 is formed in the internal peripheral portion of the cylinder part 123. An end surface 123b (joint body-side contact part) on the rear side of the thread part 123a of the cylinder part 123 comes in contact with a protuberance 138 (fastening part-side contact part) of the coupling member 3, described hereinafter, to constitute a threading contact part 140 when the coupling member 3 is mounted to the joint body 2. The shaft part 23 is formed so as to protrude into the space in the internal periphery of the cylinder part 123. An annular space 125 for adjusting the strength of the shaft part 23 when the pipe is connected is formed in the external peripheral surface of the shaft part 23. A ventilation hole 125a for preventing internal freezing is formed in the external periphery of the annular space 125. The external peripheral portions of the base part 21 and the cylinder part 123 are formed to have substantially hexagonal nut-shaped profiles so that they can be gripped by a universal fastening tool. An insertion hole 24 for inserting the pipe P1 is formed in the axial center portion from the socket part 22 up to the base part 21. An insertion hole 25 for inserting the pipe P2 is formed in the axial center portion from the shaft part 23 up to the base part 21. Between the insertion hole 24 and the insertion hole 25 in the axial direction is formed an uneven section 26 which forms a communication hole smaller in diameter than the insertion hole 24 and the insertion hole 25, and which regulates the axial movement of the pipes P1, P2. The distal ends of the pipes P1, P2 inserted into the insertion holes 24, 25 are brought in contact with the uneven section 26, whereby the uneven section 26 holds the distal end positions of the pipes P1, P2 steady. A cam surface 27 is formed in the distal end portion of the shaft part 23, i.e., the rear end portion of the insertion hole 25. The cam surface 27 is an inclined surface in which the front portion is a continuation of the insertion hole 25, and the diameter increases toward the rear of the cam surface. The cam surface 27 produces force for pressing the front ferrule 4 diametrically inward when the coupling member 3 is mounted to the joint body 2. The cam surface 27 is formed so that the incline angle *α*2 of the front portion relative to the axial center is greater than the incline angle *α*1 of the rear portion relative to the axial center (see FIG. 7).

The coupling member 3 is a member made of a metal such as brass, and an insertion hole 32 for inserting the pipe P2 is formed in the axial center portion, while a discoid slit 132 having a seam in the radial direction is formed so as to halve the coupling member 3 to the front and rear. A fastening part 133 threaded with the joint body 2 is formed in the front side of the discoid slit 132, and a tool-engaging part 134 gripped by the universal fastening tool is formed in the rear side of the discoid slit 132. A thread part 133a composed of a male screw to be threaded with the thread part 123a of the joint body 2 is formed in the external peripheral portion of the fastening part 133. The external peripheral portion of the tool-engaging part 134 is formed to have a substantially hexagonal nut-shaped profile so that it can be gripped by a universal fastening tool. A cut part 136 composed of a thin annular portion for linking the fastening part 133 and the tool-engaging part 134 is formed between the discoid slit 132 and the insertion hole 32 in the radial direction. The cut part 136 is designed to have a strength such that it is cut when the fastening torque of the tool-engaging part 134 increases to a pipe-connection completion value. The cut part 136 is formed so as to decrease in thickness toward the front, and is cut near the fastening part 133. The front portion of the fastening part 133 constitutes the base part 31. A pressing surface 34 is formed in the front portion of the base part 31. The pressing surface 34 is an inclined surface of which the axial center retreats rearward. When the coupling member 3 is mounted to the joint body 2, the pressing surface 34 presses on the back ferrule 5 by changing the fastening torque that fastens the coupling member 3 into force pressing forward in the axial direction and inward in the diametric direction. A provisional-assembly engaging part 35 for enabling the back ferrule 5 and the coupling member 3 to be provisionally assembled is also formed in the front portion of the base part 31. The provisional-assembly engaging part 35 is positioned in the front side of the pressing surface 34 and the rear side of the threaded part 33a. The provisional-assembly engaging part 35 has primarily a provisional-assembly protruding part 36 and a provisional-assembly enlarged-diameter part 37. The provisional-assembly protruding part 36 is an annular portion that protrudes diametrically inward in a position to the front of the pressing surface 34. The internal peripheral surface of the provisional-assembly protruding part 36 has an inclined surface 36a that increases in diameter further toward the front. The purpose of the inclined surface 36a is to make it easier to press fit a provisional-assembly protruding part 57 formed in the rearward part 53 of the back ferrule 5. The provisional-assembly enlarged-diameter part 37 is a portion having a larger inside diameter than the provisional-assembly protruding part 36 in a position to the rear of the provisional-assembly protruding part 36, i.e. in a position axially between the pressing surface 34 and the provisional-assembly protruding part 36. The purpose of the provisional-assembly enlarged-diameter part 37 is to hold the provisional-assembly protruding part 57 inserted through the provisional-assembly protruding part 36. The inside diameter of the provisional-assembly protruding part 36 is denoted as Dcn1, and the inside diameter of the provisional-assembly enlarged-diameter part 37 is denoted as Dcn2 (see FIG. 5). Formed in the rear portion of the fastening part 133 are a plurality (six in this case) of engaging holes 135 of a predetermined depth and circular in cross section, in which a specialized tool 107 can engage. Machining holes 137 for enabling the engaging holes 135 to be machined from the tool-engaging part 134 side are formed in the tool-engaging part 134 so as to face the engaging holes 135. Furthermore, a protuberance 138 (fastening part-side contact part) that protrudes in the radial direction is provided in the rear side of the thread part 133a of the fastening part 133. This protuberance 138 is formed so as to come in contact with the end surface 123b (joint body-side contact part) of the rear side of the cylinder part 123 of the joint body 2, immediately before the coupling member 3 begins to be threaded on the joint body 2 and the tool-engaging part 134 is cut from the fastening part 133. Therefore, after the rear end surface 123b of the cylinder part 123 of the joint body 2 has come in contact with the protuberance 138, fastening torque equal to or greater than the cutting torque acts on the tool-engaging part 134, causing the tool-engaging part 134 to be cut from the fastening part 133. The cross-sectional shape of the protuberance 138 along the axial direction is a rectangular shape having outer surfaces parallel to the axial center. The outside diameter d of the protuberance 138 is smaller than the outside diameter dc1 of the cylinder part 123 of the joint body 2 and the outside diameter dc2 of the tool-engaging part 134 (see FIG. 12). The cross-sectional shape of the protuberance 138 as seen from the fastening direction is circular (see FIG. 15). Furthermore, the thickness t of the protuberance 138 is 0.5 to 1.0 mm (see FIG. 12).

The front ferrule 4 is a member made of a metal such as brass, and is formed separately from the back ferrule 5 before the coupling member 3 is mounted to the joint body 2. A pipe through-hole 41 into which the pipe P2 is inserted is formed in the axial center portion of the front ferrule 4. The front portion of the front ferrule 4 constitutes a forward part 42, and the rear portion constitutes a rearward part 43. A tapered surface 42a that decreases in diameter as it progresses forward is formed in the external peripheral surface of the forward part 42. The tapered surface 42a is formed so that an incline angle *β*1 relative to the axial center is smaller than the incline angle *α*1 of the rear portion of the cam surface 27 (see FIG. 7). A notch 42b cut in toward the diametric external periphery is formed in the internal peripheral surface of the forward part 42. The cross-sectional shape of the notch 42b along the axial direction is a substantial right triangle. The purpose of the notch is to make it easier to deform the front end portion of the forward part 42, i.e. the portion in front of the notch 42b. The external peripheral surface of the rearward part 43 is formed substantially parallel to the axial center. A tapered surface 43a that decreases in diameter as it progresses forward is formed in the internal peripheral surface of the rearward part 43. The tapered surface 43a produces force that presses the back ferrule 5 diametrically inward when the coupling member 3 is mounted to the joint body 2. The incline angle of the tapered surface 43a relative to the axial center is denoted as *β*2 (see FIG. 3). A provisional-assembly engaging part 44 for enabling the front ferrule 4 and the back ferrule 5 to be provisionally assembled together is formed in the rearward part 43. The provisional-assembly engaging part 44 primarily has a provisional-assembly protruding part 45 and a provisional-assembly enlarged-diameter part 46. The provisional-assembly protruding part 45 is an annular portion that protrudes diametrically inward in a position to the rear of the tapered surface 43a. The internal peripheral surface of the provisional-assembly protruding part 45 has an inclined surface 45a that increases in diameter as it progresses toward the rear. The purpose of the inclined surface 45a is to make it easier to press fit a provisional-assembly protruding part 55 formed in a forward part 52 of the back ferrule 5. The provisional-assembly enlarged-diameter part 46 is a portion having a larger inside diameter than the provisional-assembly protruding part 45 in a position to the front of the provisional-assembly protruding part 45, i.e. in a position axially between the tapered surface 43a and the provisional-assembly protruding part 45. The purpose of the provisional-assembly enlarged-diameter part 46 is to hold the provisional-assembly protruding part 55 inserted through the provisional-assembly protruding part 45. The inside diameter of the provisional-assembly protruding part 45 is denoted as Dfm1, and the inside diameter of the provisional-assembly enlarged-diameter part 46 is denoted as Dfm2 (see FIG. 3).

The back ferrule 5 is a member made of a metal such as brass, and is formed separately from the front ferrule 4 before the coupling member 3 is mounted to the joint body 2. A pipe through-hole 51 into which the pipe P2 is inserted is formed in the axial center portion of the back ferrule 5. The front portion of the back ferrule 5 constitutes a forward part 52, and the rear portion constitutes a rearward part 53. A tapered surface 52a that decreases in diameter as it progresses forward is formed in the external peripheral surface of the forward part 52. The tapered surface 52a is formed so that an incline angle *γ*1 relative to the axial center is smaller than the incline angle *β*2 of the tapered surface 43a of the front ferrule 4 (see FIG. 3). A provisional-assembly engaging part 54 for enabling the front ferrule 4 and the back ferrule 5 to be provisionally assembled together is formed in the forward part 52. The provisional-assembly engaging part 54 is capable of engaging with the provisional-assembly engaging part 44 of the front ferrule 4. The provisional-assembly engaging part 54 has primarily a provisional-assembly protruding part 55. The provisional-assembly protruding part 55 is an annular portion that protrudes diametrically outward in a position to the rear of the tapered surface 52a. The external peripheral surface of the provisional-assembly protruding part 55 has an inclined surface 55a, and an inclined surface 55b that is continuous with the rear side of the inclined surface 55a. The inclined surface 55a increases in diameter as it progresses toward the rear. The inclined surface 55b decreases in diameter as it progresses toward the rear. Specifically, the external peripheral surface of the provisional-assembly protruding part 55 has a substantially triangular cross-sectional shape along the axial direction. The purpose of the inclined surface 55a is to make it easier to press-fit itself into the provisional-assembly protruding part 45 formed in the rearward part 43 of the front ferrule 4. The outside diameter of the provisional-assembly protruding part 55, i.e. the maximum outside diameter Dm of the provisional-assembly engaging part 54 is greater than the inside diameter Dfm1 of the provisional-assembly protruding part 45 of the front ferrule 4 and is less than the inside diameter Dfm2 of the provisional-assembly enlarged-diameter part 46 (see FIG. 3). A provisional-assembly engaging part 56 for enabling the back ferrule 5 and the coupling member 3 to be provisionally assembled is also formed in the rearward part 53. The provisional-assembly engaging part 56 can engage with the provisional-assembly engaging part 35 of the coupling member 3. The provisional-assembly engaging part 56 has primarily the provisional-assembly protruding part 57. The provisional-assembly protruding part 57 is an annular portion that protrudes diametrically outward. The cross-sectional shape of the provisional-assembly protruding part 57 along the axial direction is an arcuate shape. Specifically, the external peripheral surface of the provisional-assembly protruding part 57 is an arcuate surface such that the portion in the axially central vicinity protrudes the farthest diametrically outward, and the diameter decreases as it progresses both forward and backward away from this portion. The provisional-assembly protruding part 57 is designed to come in contact with the pressing surface 34 of the coupling member 3 when the coupling member 3 is mounted to the joint body 2. The outside diameter of the provisional-assembly protruding part 57, i.e. the maximum outside diameter Dn of the provisional-assembly engaging part 56 is greater than the inside diameter Dcn1 of the provisional-assembly protruding part 36 of the coupling member 3 and is less than the inside diameter Dcn2 of the provisional-assembly enlarged-diameter part 37 (see FIG. 5).

The front ferrule 4 and the back ferrule 5 configured as described above are capable of being provisionally assembled together before the coupling member 3 is mounted to the joint body 2 (see FIG. 2). The front ferrule 4 and the back ferrule 5 are designed to be provisionally assembled so that mutual axial movement and diametric movement are restricted due to the provisional-assembly engaging part 54 formed in the forward part 52 of the back ferrule 5 and the provisional-assembly engaging part 44 formed in the rearward part 43 of the front ferrule 4 being engaged together. More specifically, the forward part 52 of the back ferrule 5 is designed to be provisionally assembled by being pressed into the rearward part 43 of the front ferrule 4 in a state in which the axial center of the front ferrule 4 and the axial center of the back ferrule 5 are aligned. Specifically, due to the inclined surface 55a of the provisional-assembly protruding part 55 being pressed into the inclined surface 45a of the provisional-assembly protruding part 45, the provisional-assembly protruding part 45 deforms so as to slightly enlarge in diameter and the provisional-assembly protruding part 55 deforms so as to slightly constrict in diameter. This deformation of the provisional-assembly protruding parts 45, 55 causes the provisional-assembly protruding part 55 to be press-fitted and inserted through the provisional-assembly enlarged-diameter part 46 via the provisional-assembly protruding part 45. After the provisional-assembly protruding part 55 is inserted into the provisional-assembly enlarged-diameter part 46, the provisional-assembly protruding parts 45, 55 are returned to their pre-deformation state or to a state near pre-deformation by post-deformation buckling, and the provisional-assembly protruding part 55 is held in a state of being inserted into the provisional-assembly enlarged-diameter part 46. Axial displacement between the front ferrule 4 and the back ferrule 5 is thereby suppressed when the coupling member 3 is mounted to the joint body 2. The back ferrule 5 and the coupling member 3 configured as described above are also configured to be capable of being provisionally assembled together before the coupling member 3 is mounted to the joint body 2 (see FIG. 4). The back ferrule 5 and the coupling member 3 herein are provisionally assembled in a state of restricted axial and diametric mutual movement, due to the engaging of the provisional-assembly engaging part 56 formed in the rearward part 53 of the back ferrule 5 and the provisional-assembly engaging part 35 formed in the base part 31 of the coupling member 3. More specifically, the rearward part 53 of the back ferrule 5 is designed to be provisionally assembled by being pressed into the base part 31 of the coupling member 3 in a state in which the axial center of the back ferrule 5 and the axial center of the coupling member 3 are aligned. Specifically, due to the provisional-assembly protruding part 57 being pressed into the inclined surface 36a of the provisional-assembly protruding part 36, the provisional-assembly protruding part 36 deforms so as to slightly enlarge in diameter and the provisional-assembly protruding part 57 deforms so as to slightly constrict in diameter. This deformation of the provisional-assembly protruding parts 36, 57 causes the provisional-assembly protruding part 57 to be press-fitted and inserted through the provisional-assembly enlarged-diameter part 37 via the provisional-assembly protruding part 36. After the provisional-assembly protruding part 57 is inserted into the provisional-assembly enlarged-diameter part 37, the provisional-assembly protruding parts 36, 57 are returned to their pre-deformation state or to a state near pre-deformation by post-deformation buckling, and the provisional-assembly protruding part 57 is held in a state of being inserted into the provisional-assembly enlarged-diameter part 37. The front ferrule 4, the back ferrule 5, and the coupling member 3 can thereby be coupled to the joint body 2 in a state of being provisionally assembled together. The difference between the outside diameter Dm of the provisional-assembly engaging part 54 of the back ferrule 5 and the inside diameter Dfm1 of the provisional-assembly protruding part 45 of the front ferrule 4 is denoted as the ferrule-ferrule press-fitting margin Sff (see FIG. 3). The difference between the outside diameter Dn of the provisional-assembly protruding part 57 of the back ferrule 5 and the inside diameter Dcn1 of the provisional-assembly protruding part 36 of the coupling member 3 is denoted as the ferrule-coupling member press-fitting margin Sfc (see FIG. 5). The strength of the provisional-assembly protruding part 45 of the front ferrule 4 is denoted as the front ferrule-side provisional-assembly protruding part strength Ff. The strength of the provisional-assembly protruding part 36 of the coupling member 3 is denoted as the coupling member-side provisional-assembly protruding part strength Fc. In this case, the front ferrule 4, the back ferrule 5, and the coupling member 3, in terms of the press-fitting margins of the protruding parts, are configured so as to fulfill the relationship Sff < Sfc. When the front ferrule 4 and the coupling member 3 are pressed together with the back ferrule 5 clamped between the front ferrule 4 and the coupling member 3, the front ferrule 4 and the back ferrule 5, which have the smaller press-fitting margin, are provisionally assembled first. Then the back ferrule 5 and the coupling member 3, which have the greater press-fitting margin, are provisionally assembled. The front ferrule 4, the back ferrule 5, and the coupling member 3, in terms of the strength of the protruding parts, are configured so as to fulfill the relationship Ff < Fc. When the front ferrule 4 and the coupling member 3 are pressed together with the back ferrule 5 clamped between the front ferrule 4 and the coupling member 3, the front ferrule 4 and the back ferrule 5, which have less protruding part strength, are thereby provisionally assembled first. Then the back ferrule 5 and the coupling member 3, which have greater protruding part strength, are provisionally assembled. Thus, the front ferrule 4, the back ferrule 5, and the coupling member 3 can be provisionally assembled smoothly by appropriately setting the press-fitting margins and the strengths of the protruding parts as described above.

### <Method>

The following is a description of a pipe connection method using the flareless tube connection structure 1 of the present embodiment configured as described above.

Prior to connecting the pipe P2, the joint body 2 is attached to the pipe P1 led out from the connected-side device. Next, to connect the pipe P2 using the flareless tube connection structure 1, first the pipe P2 to be connected is inserted into the insertion hole 32 of the coupling member 3, and the coupling member 3 is fitted over the pipe P2. Next, the pipe P2 is inserted into the pipe through-holes 31, 41, 51 of the front ferrule 4, the back ferrule 5, and the coupling member 3 which have been provisionally assembled together in advance, and the front ferrule 4, the back ferrule 5, and the coupling member 3 are fitted over the pipe P2. Provisionally assembling the front ferrule 4, the back ferrule 5, and the coupling member 3 is not limited to being done in advance before the pipe P2 is inserted into the front ferrule 4, the back ferrule 5, and the coupling member 3. For example, when the pipe P2 is inserted into the front ferrule 4, the back ferrule 5, and the coupling member 3 when they have not been provisionally assembled together, the ferrules 4, 5 and the coupling member 3 may be provisionally assembled by clamping the back ferrule 5 between the front ferrule 4 and the coupling member 3 in the axial direction. The front end portion of the pipe P2 is then inserted into the insertion hole 25 of the joint body 2 and the pipe P2 is brought in contact with the uneven section 26, in which state the coupling member 3 is threaded onto the joint body 2 with the front ferrule 4 and the back ferrule 5 provisionally assembled.

In this state, when the tool-engaging part 134 of the coupling member 3 is fastened to the joint body 2 by hand, the rearward part 53 of the back ferrule 5 is pressed forward by the pressing surface 34 of the coupling member 3. The rearward part 43 of the front ferrule 4, which is provisionally assembled with the back ferrule 5, is also pressed forward by the forward part 52 of the back ferrule 5. The tapered surface 42a of the forward part 42 of the front ferrule 4 thereby comes in contact with the rear portion of the cam surface 27 of the joint body 2. At this time, the portion of the forward part 42 of the front ferrule 4 that is in front of the notch 42b is bent diametrically inward and provisionally snared on the front portion of the cam surface 27 (the portion having the incline angle *α*2). The tapered surface 52a of the forward part 52 of the back ferrule 5 also comes in contact with the tapered surface 43a of the rearward part 43 of the front ferrule 4.

In this state, a universal fastening tool is used to fasten the tool-engaging part 134 of the coupling member 3 to the joint body 2. The tapered surface 42a is then first pressed into the cam surface 27, and the cam surface 27, which is an inclined surface, produces force that presses the forward part 42 of the front ferrule 4 diametrically inward. This pressing force causes the front portion of the forward part 42 to wedge into the pipe P2. At this time, the incline angle *β*1 of the tapered surface 42a is less than the incline angle *α*1 of the rear portion of the cam surface 27, and the force pressing the forward part 42 of the front ferrule 4 diametrically inward can therefore be increased. This results in the formation of a seal part 61 between the cam surface 27 of the joint body 2 and the tapered surface 42a of the front ferrule 4, and a seal part 62 between the front end of the front ferrule 4 and the pipe P2.

When the front ferrule 4 is wedged further into the pipe P2, a seal part 63 is then formed between the tapered surface 43a of the front ferrule 4 and the tapered surface 52a of the back ferrule 5, and a seal part 64 is formed between the front end of the back ferrule 5 and the pipe P2. Specifically, the tapered surface 52a is pressed into the tapered surface 43a, and the tapered surface 43a, which is an inclined surface, produces force that presses the forward part 52 of the back ferrule 5 diametrically inward. This pressing force causes the front portion of the forward part 52 to wedge into the pipe P2. At this time, the incline angle *γ*1 of the tapered surface 52a is less than the incline angle *β*2 of the tapered surface 43a, and the force pressing the forward part 52 of the back ferrule 5 diametrically inward can therefore be increased. Also at this time, the rearward part 53 of the back ferrule 5 is not only pressed forward by the pressing surface 34 of the coupling member 3, but is also pressed diametrically inward. Therefore, the provisional-assembly protruding part 57 deforms in the back ferrule 5 provisionally assembled with the coupling member 3, and because this deformation is uneven in the circumferential direction, there is a risk of fluid leaking out. However, because the cross-sectional shape of the provisional-assembly protruding part 57 along the axial direction is an arcuate shape in this case, the deformation of the provisional-assembly protruding part 57 is impeded and uneven deformation in the circumferential direction is prevented. When the front portion of the forward part 52 is completely wedged into the pipe P2 and the coupling member 3 is further threaded by a predetermined amount over the joint body 2 (see FIGS. 13 and 18), the threading of the coupling member 3 on the joint body 2 is limited by the threading contact part 140. Specifically, the rear end surface 123b (joint body-side contact part) of the thread part 123a of the cylinder part 123 of the joint body 2 comes in contact with the protuberance 138 (fastening part-side contact part) of the fastening part 133 of the coupling member 3. When an attempt is made to then further thread the coupling member 3 over the joint body 2, fastening torque equal to or greater than the cutting torque acts on the tool-engaging part 134, the cut part 136 is therefore cut, and the tool-engaging part 134 is separated from the fastening part 133 (see FIGS. 14 and 18).

In a flareless tube connection structure that does not have a threading contact part 140, there is fluctuation in the cutting torque of the coupling member 3 due to factors such as the strength of the material used (a hard material or a soft material) and the dimensional tolerance of the cut part 136, as shown in FIGS. 16 and 17. For example, when the cutting torque of the coupling member 3 is set in accordance with a soft material, and when a hard material is used and the cut part 136 is cut near the lower limit value of the cutting torque as shown in FIG. 16, the members such as the ferrules 4, 5 that are wedged into the pipe P2 are not wedged sufficiently, and the desired seal performance is not achieved. Conversely, when the cutting torque of the coupling member 3 is set in accordance with a hard material, and when a soft material is used and the cut part 136 is cut near the upper limit value of the cutting torque as shown in FIG. 17, the tool-engaging part 134 is cut after the members such as the ferrules 4, 5 that are wedged into the pipe P2 are wedged to the point of breaking. Thus, in a flareless tube connection structure that does not have a threading contact part 140, there is a risk of defects such as seal failure and member breakage resulting from fluctuation in the cutting torque of the coupling member 3. Because the flareless tube connection structure 1 has a threading contact part 140, however, it is possible to minimize defects such as seal failure and member breakage resulting from fluctuation in the cutting torque of the coupling member 3. Specifically, the contact positions of the end surface 123b (joint body-side contact part) and the protuberance 138 (fastening part-side contact part) constituting the threading contact part 140 are set to the rotational angle of the coupling member 3 immediately before the tool-engaging part 134 is cut from the fastening part 133. At this time, if the cutting torque of the coupling member 3 is set in accordance with a hard material, the rotational angle of the coupling member 3 will not be excessive and the fastening torque can be quickly increased to the cutting torque even when a soft material is used, as shown in FIG. 18. It is thereby possible to prevent seal failure and member breakage.

A pipe connection is thus established using the flareless tube connection structure 1 of the present embodiment. In the flareless tube connection structure 1 at this time, because the front ferrule 4, the back ferrule 5, and the coupling member 3 are provisionally assembled together, the front ferrule 4 and the back ferrule 5 become clamped between the joint body 2 and the coupling member 3 while the provisional assembly remains intact. Therefore, axial displacement between the front ferrule 4 and the back ferrule 5 is suppressed, and the front ends of the ferrules 4, 5 are reliably wedged into the pipe P2. Fluid is thereby impeded from leaking through the seal parts 62, 64 formed by the wedging of the front ends of the ferrules 4, 5 in the pipe P2. Because the flareless tube connection structure 1 has a threading contact part 140, it is possible to minimize defects such as seal failure and member breakage resulting from fluctuation in the cutting torque of the coupling member 3.

Next, the fastening part 133, fastened in the state described above, cannot easily be loosened by anybody because the tool-engaging part 134 is cut, but can be loosened using a specialized tool 107 such as the one shown in FIG. 19.

The specialized tool 107 has primarily two base parts 171 a, 171 b, which are shaped as a hexagonal disc divided in two. The base parts 171a, 171b have nut parts 172a, 172b that form a hexagonal nut due to the base parts being coupled together. Two columnar engaging protrusions 175b that engage with engaging holes (not shown) in the base part 171a are formed in the surface of the base part 171b that faces the base part 171a. Semicircular holes 173a, 173b are also formed in the middles of the base parts 171a, 171b. The inside diameters of the holes 173a, 173b are formed slightly larger than the outside diameter of the pipe P2. Three columnar engaging protrusions 174a, 174b capable of engaging with the engaging holes 135 of the fastening part 133 are formed in the side surfaces of both base parts 171a, 171b.

The base parts 171a, 171b of the specialized tool 107 are coupled by the engaging holes and the engaging protrusions 175b, and the engaging protrusions 174a, 174b are engaged in the engaging holes 135 of the fastening part 133. The threading between the fastening part 133 and the joint body 2 can be loosened and the pipe P2 can be removed by using a universal fastening tool on the nut parts 172a, 172b of the specialized tool 107 to rotate the specialized tool 107. With this pipe disconnecting method, the pipe P2 can be removed without cutting the pipe P2.

### <Characteristics>

Next is a description of the characteristics of the flareless tube connection structure 1 of the present embodiment configured in the above manner.
(A)
   In the flareless tube connection structure 1, threading the coupling member 3 over the joint body 2 is limited by the threading contact part 140 (the end surface 123b of the joint body 2 and the protuberance 138 of the coupling member 3 in this case) at the stage when the coupling member 3 has been threaded over the joint body 2 by a predetermined amount, as described above. When an attempt is made to then further thread the coupling member 3 over the joint body 2, fastening torque equal to or greater than the cutting torque acts on the tool-engaging part 134, and the tool-engaging part 134 is separated from the fastening part 133.
   It is thereby possible in the flareless tube connection structure 1 to determine the predetermined amount for threading the coupling member 3 over the joint body 2, taking into account the fluctuation in cutting torque due to factors such as the strength of the material used and the dimensional tolerance of the members, and it is also possible to minimize defects such as seal failure and member breakage (see FIGS. 16 to 18).
(B)
   In the flareless tube connection structure 1, the threading of the coupling member 3 over the joint body 2 is limited by contact between the fastening-direction rear ends of the thread part 123a of the joint body 2 and the thread part 133a of the fastening part 133, and/or between the contact parts 123b, 138 formed in the rear sides.
(C)
   In the flareless tube connection structure 1, the protuberance 138 (fastening part-side contact part) protrudes in the radial direction.
   It is thereby possible in the flareless tube connection structure 1 to reduce the size of the threading contact part 140.
(D)
   In the flareless tube connection structure 1, the outside diameter d of the protuberance 138 (fastening part-side contact part) is less than the outside diameter dc1 of the joint body 2 and the outside diameter dc2 of the tool-engaging part 134.
   It is thereby possible in the flareless tube connection structure 1 to impede hindrances to the work of mounting the coupling member 3 to the joint body 2.
(E)
   In the flareless tube connection structure 1, the cross-sectional shape of the protuberance 138 (fastening part-side contact part) as seen from the fastening direction is circular.
   In the flareless tube connection structure 1, it is thereby difficult to grip the protuberance 138 with a fastening tool after the fastening part 133 has been threaded on the joint body 2 and the tool-engaging part 134 has been separated.
   It is thereby possible in the flareless tube connection structure 1 to prevent the protuberance 138 from being gripped by a fastening tool and the fastening part 133 from being loosened after the fastening part 133 has been threaded on the joint body 2 and the tool-engaging part 134 has been separated.
(F)
   In the flareless tube connection structure 1, the thickness t of the protuberance 138 (fastening part-side contact part) is 0.5 to 1.0 mm.
   It is thereby possible in the flareless tube connection structure 1 to ensure that even the cutting torque does not cause any breakage by giving the protuberance 138 a thickness t of 0.5 mm or greater. It is also possible to make it difficult to grip the protuberance 138 with a fastening tool by giving the protuberance 138 a thickness t of 1.0 mm or less.

### <Modification 1>

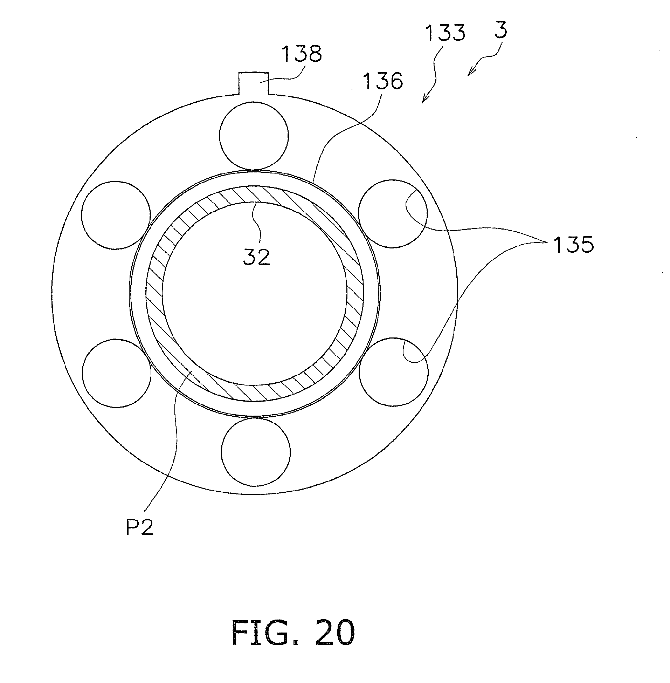

In the flareless tube connection structure 1 of the above embodiment, the cross-sectional shape of the protuberance 138 (fastening part-side contact part) constituting the threading contact part 140 as seen from the fastening direction is circular, but is not limited as such. For example, the protuberance 138 may be a partial protuberance that is intermittent in the circumferential direction, such as the protuberance 138 being formed in part of the circumferential direction as shown in FIG. 20.

It is possible in the present modification as well to determine the predetermined amount for threading the coupling member 3 over the joint body 2, taking into account fluctuation in cutting torque due to factors such as the strength of the material used and the dimensional tolerance of the members, similar to the above embodiment. It is thereby possible to minimize defects such as seal failure and member breakage.

### <Modification 2>

In the flareless tube connection structure 1 of the above embodiment and Modification 1, the threading contact part 140 is configured by the rear end surface 123b (joint body-side contact part) of the thread part 123a of the joint body 2 coming in contact with the rear protuberance 138 (fastening part-side contact part) of the thread part 133a of the fastening part 133. However, the configuration of the threading contact part 140 is not limited as such.

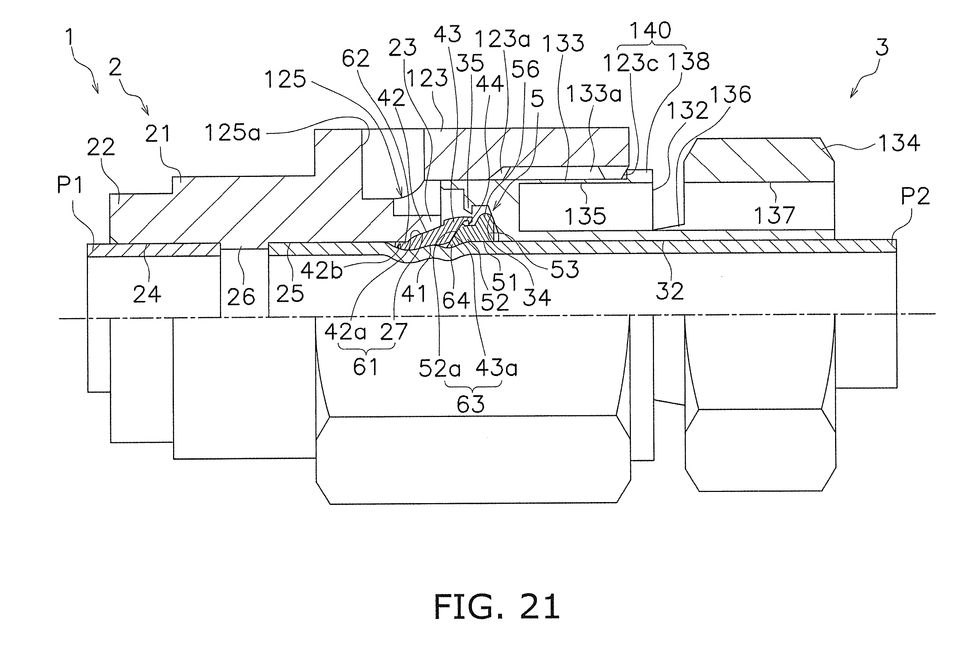

For example, the threading contact part 140 may be configured by the rear end 123c (joint body-side contact part) of the thread part 123a of the joint body 2 coming in contact with the protuberance 138 (fastening part-side contact part), as shown in FIG. 21. The rear end 123c of the thread part 123a herein contacts the protuberance 138 due to the diametrically protruding height of the protuberance 138 being less than in the above embodiment.

It is possible in the present modification as well to determine the predetermined amount for threading the coupling member 3 over the joint body 2, taking into account fluctuation in cutting torque due to factors such as the strength of the material used and the dimensional tolerance of the members, similar to the above embodiment and Modification 1. It is thereby possible to minimize defects such as seal failure and member breakage. An example is described herein in which the threading contact part 140 is altered as described above, assuming the configuration is that of the above embodiment, but the present invention is not limited to this example. The threading contact part 140 may be altered as described above in Modification 1, for example.

### <Modification 3>

In the flareless tube connection structure 1 of the above embodiment and Modification 1, the threading contact part 140 is configured by the rear end surface 123b (joint body-side contact part) of the thread part 123a of the joint body 2 coming in contact with the rear protuberance 138 (fastening part-side contact part) of the thread part 133a of the fastening part 133. However, the configuration of the threading contact part 140 is not limited as such.

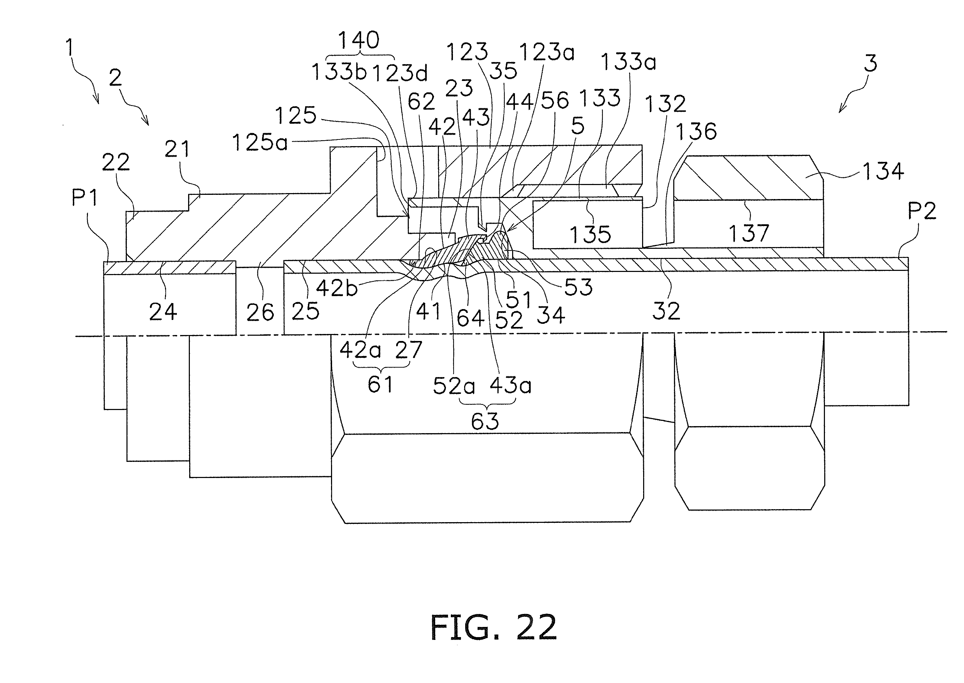

For example, the threading contact part 140 may be configured by a front surface 123d (joint body-side contact part) of the thread part 123a of the joint body 2 coming in contact with a front surface 133b (fastening part-side contact part) of the thread part 133a of the fastening part 133, as shown in FIG. 22. The front end of the fastening part 133 herein protrudes farther forward than in the above embodiment, and thereby comes in contact with the surface 123d near the annular space 125 of the joint body 2.

It is possible in the present modification as well to determine the predetermined amount for threading the coupling member 3 over the joint body 2, taking into account fluctuation in cutting torque due to factors such as the strength of the material used and the dimensional tolerance of the members, similar to the above embodiment and Modification 1. It is thereby possible to minimize defects such as seal failure and member breakage. An example is described herein in which the threading contact part 140 is altered as described above, assuming the configuration is that of the above embodiment, but the present invention is not limited to this example. The threading contact part 140 may be altered as described above in Modification 1, for example.

### <Modification 4>

In the flareless tube connection structure 1 of the above embodiment and Modification 1, the threading contact part 140 is configured by the rear end surface 123b (joint body-side contact part) of the thread part 123a of the joint body 2 coming in contact with the rear protuberance 138 (fastening part-side contact part) of the thread part 133a of the fastening part 133. However, the configuration of the threading contact part 140 is not limited as such.

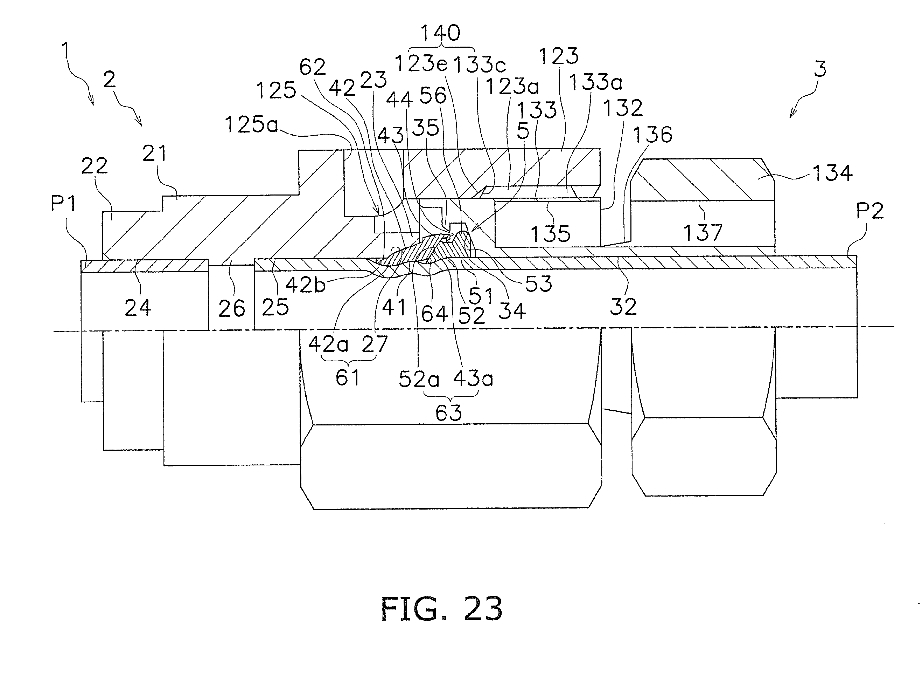

For example, the threading contact part 140 may be configured by a front end 123e (joint body-side contact part) of the thread part 123a of the joint body 2 coming in contact with a front end 133c (fastening part-side contact part) of the thread part 133a of the fastening part 133, as shown in FIG. 23. The front ends 123e, 133c of the thread parts 123a, 133a herein are brought in contact with each other by adjusting the axial lengths of the thread parts 123a, 133a.

It is possible in the present modification as well to determine the predetermined amount for threading the coupling member 3 over the joint body 2, taking into account fluctuation in cutting torque due to factors such as the strength of the material used and the dimensional tolerance of the members, similar to the above embodiment and Modification 1. It is thereby possible to minimize defects such as seal failure and member breakage. An example is described herein in which the threading contact part 140 is altered as described above, assuming the configuration is that of the above embodiment, but the present invention is not limited to this example. The threading contact part 140 may be altered as described above in Modification 1, for example.

### <Modification 5>

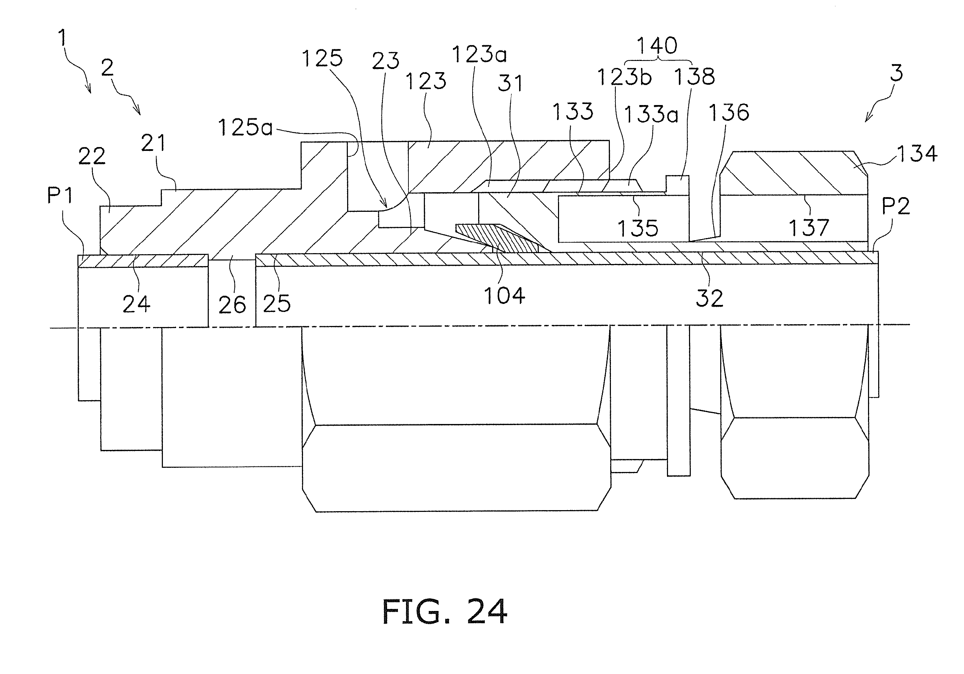

In the flareless tube connection structure 1 of the above embodiment and Modifications 1 to 4, a threading contact part 140 is provided in a double-ferrule flareless tube connection structure having a front ferrule 4 and a back ferrule 5, but the present invention is not limited as such. For example, a threading contact part 140 may be provided in a single-ferrule flareless tube connection structure having one ferrule 104 clamped between the rear end of the shaft part 23 of the joint body 2 and the front end of the base part 31 of the coupling member 3, as shown in FIG. 24. The specific configuration of the single-ferrule structure is not limited to this example, and a threading contact part 140 may be provided in various single-ferrule structures.

It is possible in the present modification as well to determine the predetermined amount for threading the coupling member 3 over the joint body 2, taking into account fluctuation in cutting torque due to factors such as the strength of the material used and the dimensional tolerance of the members, similar to the above embodiment and Modifications 1 to 4. It is thereby possible to minimize defects such as seal failure and member breakage. An example is described herein in which the double-ferrule structure is altered to a single-ferrule structure, assuming the configuration is that of the above embodiment, but the present invention is not limited to this example. The double-ferrule structure may be altered to a single-ferrule structure in Modifications 1 to 4, for example.

### <Modification 6>

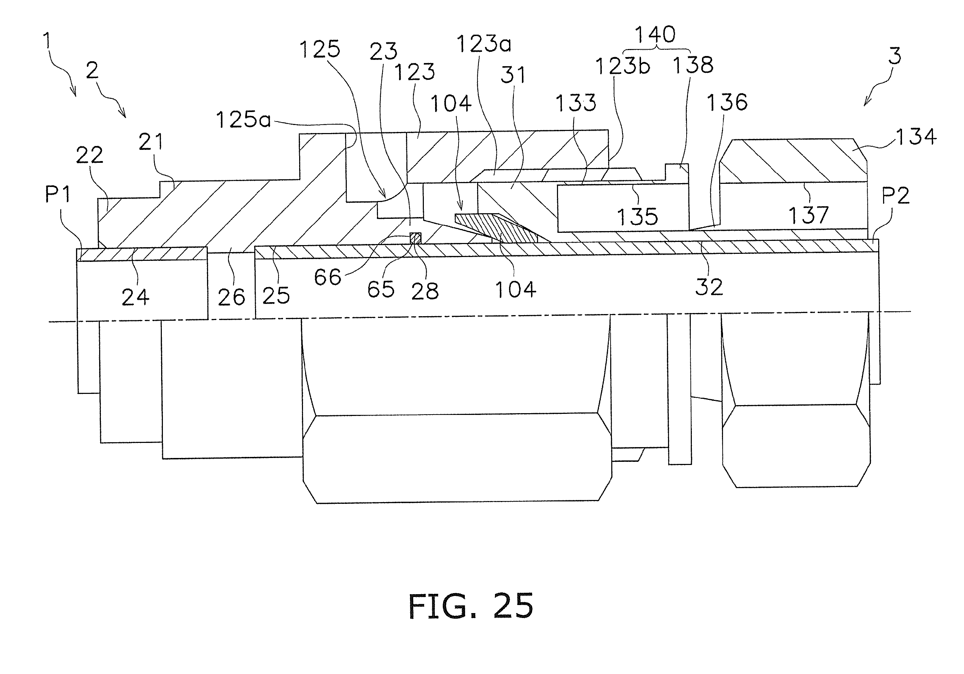

In the flareless tube connection structure 1 of Modification 5, an O-ring seal part 65 for sealing the joint body 2 and the pipe P2 may be provided as shown in FIG. 25, in order to further improve reliability with respect to fluid leakage. An annular groove 28 is formed in the inner surface of the shaft part 23 of the joint body 2, and an O-ring 66 is fitted into the groove 28.

### <Modification 7>

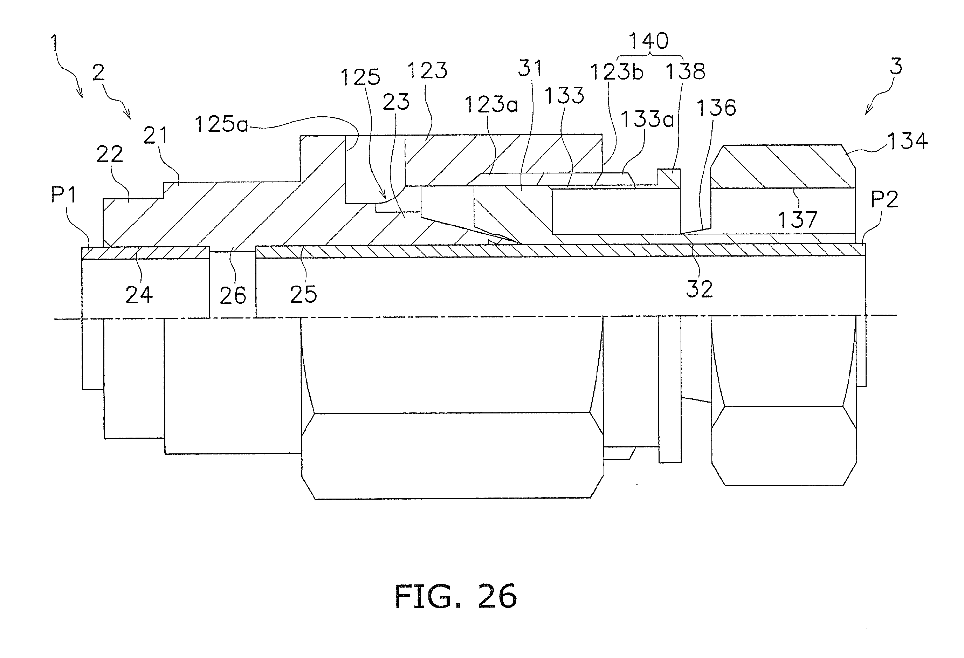

In the flareless tube connection structure 1 of the above embodiment and Modifications 1 to 4, a threading contact part 140 is provided in a double-ferrule flareless tube connection structure having a front ferrule 4 and a back ferrule 5, but the present invention is not limited as such. For example, a threading contact part 140 may be provided in a ferrule-free flareless tube connection structure, in which the rear end of the shaft part 23 of the joint body 2 and the front end of the base part 31 of the coupling member 3 are fixed and wedged together, as shown in FIG. 26. The specific configuration of the ferrule-free structure is not limited to this example, and the threading contact part 140 may be provided in various ferrule-free structures.

It is possible in the present modification as well to determine the predetermined amount for threading the coupling member 3 over the joint body 2, taking into account fluctuation in cutting torque due to factors such as the strength of the material used and the dimensional tolerance of the members, similar to the above embodiment and Modifications 1 to 4. It is thereby possible to minimize defects such as seal failure and member breakage. An example is described herein in which the double-ferrule structure is altered to a ferrule-free structure, assuming the configuration is that of the above embodiment, but the present invention is not limited to this example. The double-ferrule structure may be altered to a ferrule-free structure in Modifications 1 to 4, for example.

### <Modification 8>

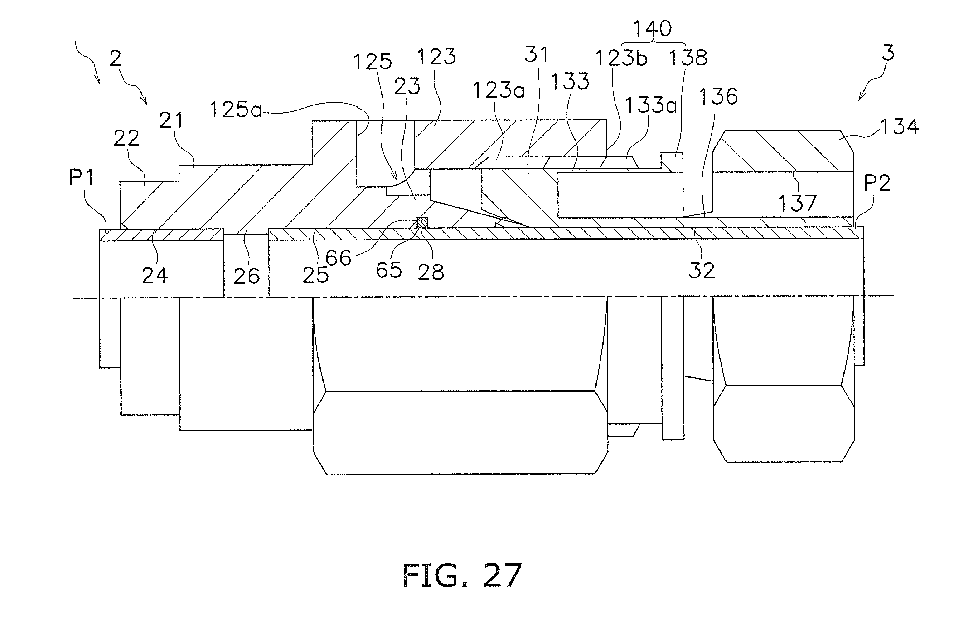

In the flareless tube connection structure 1 of Modification 7, an O-ring seal part 65 for sealing the joint body 2 and the pipe P2 may be provided as shown in FIG. 27, in order to further improve reliability with respect to fluid leakage. An annular groove 28 is formed in the inner surface of the shaft part 23 of the joint body 2, and an O-ring 66 is fitted into the groove 28.

### <Modification 9>

In the flareless tube connection structure 1 of the above embodiment and Modifications 1, 2, and 5 to 8, the cross-sectional shape along the axial direction of the protuberance 138 (fastening part-side contact part) constituting the threading contact part 140 is a rectangular shape having an outer surface parallel to the axial center, but is not limited as such. For example, the cross-sectional shape of the protuberance 138 along the axial direction may be a triangular or arcuate shape.

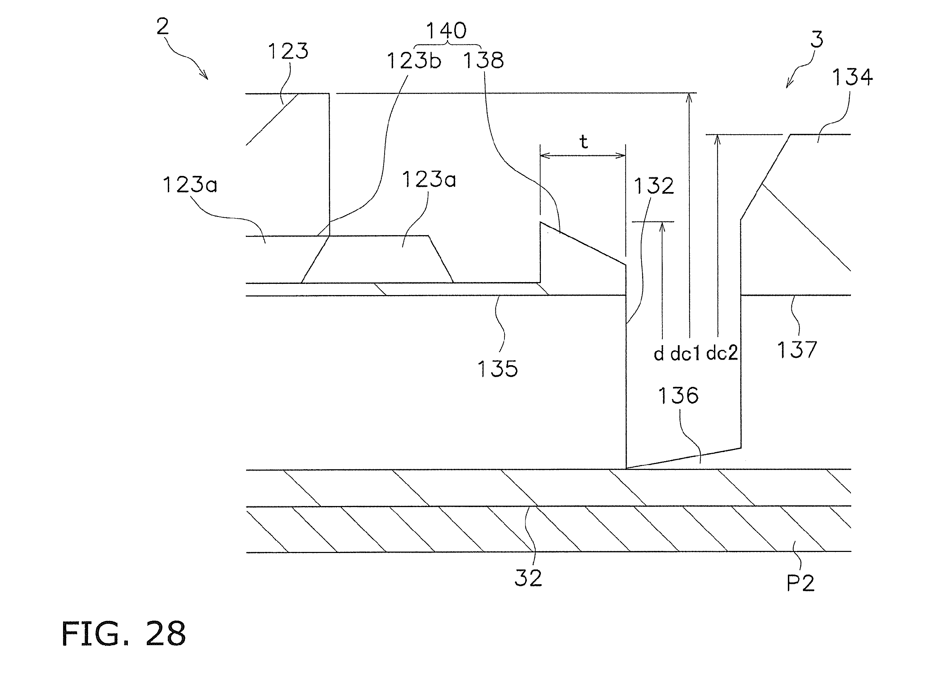

Specifically, the cross-sectional shape of the protuberance 138 along the axial direction may be a triangular shape having an outer surface that is inclined relative to the axial center, as shown in FIG. 28. In this case, it is preferable that the incline of the outer surface has a triangular shape that decreases in diameter toward the rear, from the standpoint of preventing gripping by a fastening tool (excluding the specialized tool 107).

It is possible in the present modification as well to determine the predetermined amount for threading the coupling member 3 over the joint body 2, taking into account fluctuation in cutting torque due to factors such as the strength of the material used and the dimensional tolerance of the members, similar to the above embodiment and Modifications 1, 2, 5 to 8. It is thereby possible to minimize defects such as seal failure and member breakage. Making the protuberance 138 triangular makes it possible to impede gripping by a fastening tool (excluding the specialized tool 107) even if the thickness t is greater than 1.0 mm. Moreover, if the protuberance 138 is triangular such that the diameter decreases as the incline of the outer surface progresses rearward, gripping by a fastening tool (excluding the specialized tool 107) can be effectively prevented. An example was described herein in which the cross-sectional shape of the protuberance 138 along the axial direction is altered to a triangular shape or an arcuate shape, assuming the configuration is that of the above embodiment, but the shape is not limited to this example. The cross-sectional shape of the protuberance 138 along the axial direction may be altered to a triangular shape or an arcuate shape in Modifications 1, 2, and 5 to 8, for example.

### <Other Embodiments>

Embodiments of the present invention were described above based on the drawings, but the specific configuration is not limited to the above embodiment or the modifications thereof; it can be varied within a range that does not deviate from the scope of the invention.

In the above embodiment and the modifications thereof, the pipe P1 is brazed or otherwise attached to the joint body 2, but the present invention is not limited as such. For example, a double-union structure may be used in which the pipe P1 side of the joint body 2 is provided with the same flareless tube connection structure 1 as the pipe P2 side.

In the above embodiment and the modifications thereof, the cut part 136 is formed by a discoid slit 132 having a seam in the radial direction so as to halve the coupling member 3 front to back, but the present invention is not limited as such. For example, the cut part 136 may be formed by a cylindrical slit having a seam in the axial direction so as to halve the coupling member 3 inside to outside.

In the above embodiment and Modifications 1 to 4 and 9, a double-ferrule structure is employed in which the front ferrule 4, the back ferrule 5, and the coupling member 3 can be provisionally assembled together, but the present invention is not limited as such. The threading contact part 140 may be provided in various double-ferrule structures, such as a double-ferrule structure in which these members cannot be provisionally assembled.

In the above embodiment and the modifications thereof, a metal material such as copper is used for the pipes and a metal material such as brass is used for the joint body, the coupling member, and the ferrules, but the present invention is not limited as such. For example, aluminum, stainless steel, resins, iron, and the like may be used for the pipes, the joint body, the coupling member, and the ferrules.

### INDUSTRIAL APPLICABILITY

The present invention can be widely applied to tube connection structures configured such that a tool-engaging part of a coupling member is separated from a fastening part after the coupling member is mounted to a joint body.

### REFERENCE SIGNS LIST

- 1: Flareless tube connection structure (tube connection structure)
- 2: Joint body
- 3: Coupling member
- 123a: Thread part (joint body-side thread part)
- 123b: Rear end surface of thread part (joint body-side contact part)
- 123c: Rear end of thread part (joint body-side contact part)
- 123d: Front surface of thread part (joint body-side contact part)
- 123e: Front end of thread part (joint body-side contact part)
- 133: Fastening part
- 133a: Thread part (fastening part-side thread part)
- 133b: Front surface of thread part (fastening part-side contact part)
- 133c: Front end of thread part (fastening part-side contact part)
- 134: Tool-engaging part
- 138: Protuberance (fastening part-side contact part)
- 140: Threading contact part

### CITATION LIST

### PATENT LITERATURE

[Patent Literature 1]
   Japanese Laid-open Patent Application No. 2008-106935
[Patent Literature 2]
   Japanese Laid-open Patent Application No. 2008-157466

## Claims

1. A tube connection structure (1) comprising a joint body (2), and a coupling member (3) having a fastening part (133) threaded with the joint body and a tool-engaging part (134) gripped by a fastening tool, the tube connection structure being configured such that the tool-engaging part is separated from the fastening part after the coupling member is mounted to the joint body; wherein
the joint body and the coupling member have a threading contact part (140), the components of which are in contact with each other so that the threading of the coupling member over the joint body is limited before the tool-engaging part is separated from the fastening part.

2. The tube connection structure (1) according to claim 1, wherein
the joint body (2) has a joint body-side thread part (123a) threaded over the fastening part (133);
the fastening part has a fastening part-side thread part (133a) threaded over the joint body-side thread part; and
the threading contact part (140) is configured from a joint body-side contact part (123b, 123c) that either includes the rear end of the joint body-side thread part of the joint body or is formed on the rear side of the joint body-side thread part, and a fastening part-side contact part (138) that either includes the rear end of the fastening part-side thread part of the fastening part or is formed on the rear side, in relation to the fastening direction, which is the direction in which the coupling member (3) is mounted to the joint body.

3. The tube connection structure (1) according to claim 2, wherein
the fastening part-side contact part includes a protuberance (138) that protrudes in the radial direction.

4. The tube connection structure (1) according to claim 3, wherein
the outside diameter of the protuberance (138) is less than the outside diameter of the joint body (2) and the outside diameter of the tool-engaging part (134).

5. The tube connection structure (1) according to claim 3 or 4, wherein
the cross-sectional shape of the protuberance (138) as seen from the fastening direction is circular.

6. The tube connection structure (1) according to any of claims 3 to 5, wherein
the thickness of the protuberance (138) is 0.5 to 1.0 mm.

7. The tube connection structure (1) according to claim 1, wherein
the joint body (2) has a joint body-side thread part (123a) threaded over the fastening part(133);
the fastening part has a fastening part-side thread part (133a) threaded over the joint body-side thread part; and
the threading contact part (140) is configured from a joint body-side contact part (123d, 123e) that either includes the front end of the joint body-side thread part of the joint body or is formed on the front side, and a fastening part-side contact part (133b, 133c) that either includes the front end of the fastening part-side thread part of the fastening part or is formed on the front side of the joint body-side thread part, in relation to the fastening direction, which is the direction in which the coupling member (3) is mounted to the joint body.
